# EUROPEAN PATENT APPLICATION

(11) **EP 3 734 734 A1**
(43) Date of publication of application: **04.11.2020**
(21) Application number: 18896285.6
(22) Date of filing: 27.12.2018
(51) Int. Cl.: H01M 8/18, H01M 8/04, H01M 8/04858

(54) **REDOX FLOW BATTERY AND OPERATION METHOD THEREFOR**

(30) Priority: 28.12.2017 JP 2017253625
(71) Applicant: Showa Denko K.K., Tokyo 105-8518 (JP)
(72) Inventor: WATANABE Kentaro, Tokyo 105-8518 (JP)
(74) Representative: Strehl Schübel-Hopf & Partner
(86) International application number: PCT/JP2018/048320
(87) International publication number: WO 2019/131944

(57) **Abstract**

This redox flow battery comprises a battery cell to which a positive-electrode electrolyte and a negative-electrode electrolyte are supplied; a plurality of positive-electrode electrolyte tanks that store the positive-electrode electrolyte; a plurality of negative-electrode electrolyte tanks that store the negative-electrode electrolyte; a positive-electrode electrolyte tank switching device that switches a positive-electrode electrolyte tank among the plurality of positive electrolyte tanks; a negative-electrode electrolyte tank switching device that switches a negative-electrode electrolyte tank among the plurality of negative-electrode electrolyte tanks; a polarity switching unit that switches the polarity of the electrodes of the battery cells; and a controller for controlling switching the polarity of the electrodes, switching of the plurality of positive-electrode electrolyte tanks and switching of the plurality of negative-electrode electrolyte tanks.
Fig. 1:
Power Generation Unit, Load
Fig. 2:
Power Generation Unit, Load
Fig. 3:
Power Generation Unit, Load

## Description

### TECHNICAL FIELD

The present invention relates to a redox flow battery and a method for operating a redox flow battery.

Priority is claimed on Japanese Patent Application No. 2017-253625, filed on December 28, 2017, the content of which is incorporated herein by reference.

### BACKGROUND ART

Redox flow batteries are used for measures for electric load-leveling and momentary stop, and are attracting attention as novel batteries for electricity storage. In particular, a redox battery in which vanadium is used as an active material is known (see Patent Document 1, for example).

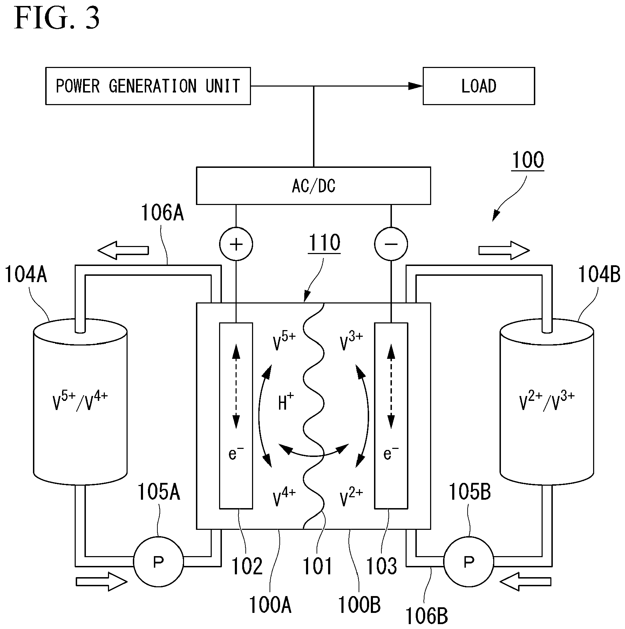

The operating principle of the redox flow battery will be described with reference to FIG. 3.

The redox flow battery 100 includes a battery cell 110 in which a positive electrode cell 100A and a negative electrode cell 100B are separated by a membrane 101 made of an ion exchange membrane, electrolyte tanks 104A and 104B for storing an electrolyte, circulation piping 106A and 106B through which an electrolyte is supplied from the electrolyte tanks 104A and 104B to the battery cell 110 by circulation, and circulation pumps 105A and 105B connected to the circulation piping 106A and 106B to circulate the electrolyte.

The positive electrode 102 is built in the positive electrode cell 100A. Moreover, the negative electrode 103 is built in the negative electrode cell 100B.

A positive-electrode electrolyte tank 104A that stores a positive-electrode electrolyte is connected to the positive electrode cell 100A via a positive-electrode electrolyte circulation piping 106A. A negative-electrode electrolyte tank 104B that stores a negative-electrode electrolyte is connected to the negative electrode cell 100B through a negative-electrode electrolyte circulation piping 106B. Circulation pumps 105A and 105B are provided in the circulation piping 106A and 106B, respectively. Each electrolyte is circulated between the tanks and the cells via the positive electrode electrolytic circulating piping 106A or the negative electrode electrolytic circulating piping 106B, respectively.

An aqueous solution of vanadium ions and other ions whose valences change is used for each electrode electrolyte. While circulating the electrolyte with the pumps 105A and 105B, the charge/discharge are performed in accordance with the valence change reaction of the ions in the positive electrode 102 and the negative electrode 103. For example, when an electrolyte containing vanadium ions is used, the reactions that occur during charging and discharging between the positive electrode and the negative electrode in the cell are as follows. Actually, it is presumed that V⁴⁺ exists as VO²⁺ and V⁵⁺ exists as VO²⁺, and it is presumed that hydrated state and sulfate group exist in coordinated state, respectively.

Positive Electrode: V⁴⁺→V⁵⁺+ e- (charging) V⁴⁺→V⁵⁺+e- (discharging)

Negative Electrode: V³⁺+e⁻→V²⁺ (charging) V³⁺ + e⁻←V²⁺ (discharging)

Hydrogen ions (H⁺) generated in the positive electrode during charging move to the negative electrode side through the membrane, and the electrical neutrality of the electrolyte is maintained. Electric power supplied from a power generation unit (for example, a power plant) is stored in the electrolyte tank as a valence change of vanadium ions having different valences. On the other hand, during discharging, the stored electric power can be taken out by a reaction opposite to that during charging and supplied to a load (customer or the like).

In the redox flow battery, the state of charge (SOC) of the electrolyte is determined by the ratio of the ionic valence in the electrolyte. For example, in the case of a vanadium redox flow battery, the SOC of the electrolyte in the positive electrode electrolyte is represented by the ratio of V⁵⁺ in the V ion (V⁴⁺/V⁵⁺), and the SOC of the electrolyte in the negative electrode electrolyte is represented by the ratio of V²⁺ in the V ion (V²⁺/V³⁺). In the battery reaction during charging, V⁴⁺ is oxidized to V⁵⁺ at the positive electrode and V³⁺ is reduced to V²⁺ at the negative electrode in the battery cell. The battery reaction during discharging is the reverse of that during charging.

In the vanadium redox flow battery, a full charge voltage (charge expiration voltage, charge end voltage) and a discharge end voltage are set in advance from the viewpoint of deterioration suppression, charging efficiency and the like. During normal operation of the battery, charging/discharging is performed within a chargeable/dischargeable range from a discharged state (eg, charged state: 20%) to a fully charged state (eg, charged state: 80%). Here, the full charge voltage is a voltage set to stop charging from the power system, and the discharge end voltage is a voltage set to stop discharging to the power system.

### CITATION LIST

### Patent Documents

[Patent Document 1] Japanese Unexamined Patent Application, First Publication No. S62-186473
[Patent Document 2] Japanese Patent, No. 5027384
[Patent Document 3] Japanese Unexamined Patent Application, First Publication No. H11-204124
[Patent Document 4] Japanese Unexamined Patent Application, First Publication No. 2001-43884
[Patent Document 5] U.S. Patent Application Publication No.US 2014/0193673

### SUMMARY OF INVENTION

### Problems to be Solved by the Invention

Since the vanadium-based redox flow battery has a single-element electrolyte, it has an advantage that it can be regenerated by charging even if the positive electrode electrolyte and the negative electrode electrolyte are mixed. However, even in a redox flow battery, when the charging and the discharging are repeated, various ions and solvents in the electrolyte move through the membrane, and the amount of the electrolyte in the positive electrode and the negative electrode increases or decreases. As a result, the balance of the active material ions of the positive electrode electrolyte and the negative electrode electrolyte is disturbed, the battery capacity is determined according to the cell with a low state of charge, and the battery capacity decreases.

As a rebalancing method for eliminating such an unbalance of the active material ions, a configuration, in which the positive-electrode electrolyte tank and the negative-electrode electrolyte tank are connected by a communication pipe, and a valve is provided in this communication pipe to reduce the amount of the electrolyte in the tank, has been proposed (e.g., see Patent Literatures 2 to 4). In the configuration, when the amount of electrolyte in the tank decreases, the valve is opened to mix the positive electrode electrolyte and the negative electrode electrolyte through the communication pipe.

On the other hand, Patent literature 5 (particularly FIG. 3) discloses a method of inverting the polarity. In this method, only the changeover switch is provided, and it is not necessary to provide equipment such as pipes or pumps. However, if the polarity is switched for rebalancing, a state in which the battery is not charged at all (overdischarging state) is passed, and thus a period during which recharging cannot be performed occurs. Therefore, during the rebalancing work, it was not possible to meet a sudden demand for output and the like.

The present invention has been made in view of the above problems, and an object of the present invention is to provide a redox flow battery and an operating method thereof that can promptly meet the demand for output even during rebalancing work of active material ions.

### Means for Solving the Problems

The present invention provides the following means in order to solve the above problems.
(1) A redox flow battery according to one aspect of the present invention includes a battery cell to which a positive-electrode electrolyte and a negative-electrode electrolyte are supplied; a plurality of positive-electrode electrolyte tanks that store the positive-electrode electrolyte; a plurality of negative-electrode electrolyte tanks that store the negative-electrode electrolyte; a positive-electrode electrolyte tank switching device that switches a positive-electrode electrolyte tank among the plurality of positive electrolyte tanks; a negative-electrode electrolyte tank switching device that switches a negative-electrode electrolyte tank among the plurality of negative-electrode electrolyte tanks; a polarity switching unit that switches the polarity of the electrodes of the battery cells; and a controller for controlling switching the polarity of the electrodes, switching of the plurality of positive-electrode electrolyte tanks and switching of the plurality of negative-electrode electrolyte tanks.
(2) In a method for operating the redox flow battery according to one aspect of the present invention, using the redox flow battery described in (1) above, at least one pair of the positive-electrode electrolyte tank and the negative-electrode electrolyte tank among the plurality of positive-electrode electrolyte tanks and the plurality of negative-electrode electrolyte tanks is fully charged, when a request for discharging to the external power system is received during the rebalancing work, the tank to be used is switched to the pair of fully charged tanks, and the pair of tanks is used for discharging.
(3) In a method for operating the redox flow battery according to one aspect of the present invention, using the redox flow battery described in (1) above, when a request for discharging to the external power system is received during the rebalancing work, the tank to be used is switched to the pair of tanks with the highest state of charge of the electrolyte among the plurality of positive-electrode electrolyte tanks and the plurality of negative-electrode electrolyte tanks, and the pair of tanks is used for discharging.
(4) In a method for operating the redox flow battery described above, the rebalancing may be performed by charging with a polarity that is the reverse of the polarity of the battery cell before the rebalancing.

### Effect of the Invention

According to the redox flow battery of the present invention, it is possible to provide a redox flow battery that can promptly meet the demand for the output even during the rebalancing work of the active material ions.

### BRIEF DESCRIPTION OF DRAWINGS

FIG. 1 is a longitudinal cross-sectional schematic view of a redox flow battery according to an example of an embodiment of the present invention.
FIG. 2 is a longitudinal cross-sectional schematic view of the redox flow battery after polarity switching in FIG. 1.
FIG. 3 is a longitudinal cross-sectional schematic view of a redox flow battery of the conventional redox flow battery.

### DESCRIPTION OF EMBODIMENTS

Hereinafter, an embodiment will be described in detail with reference to the drawings as appropriate. In the drawings used in the following description, in order to make the features of the present invention easy to understand, there are cases where features are enlarged for the sake of convenience, and the dimensional ratios and the like of each component may differ from the actual ones. The materials, dimensions, and the like exemplified in the following description are examples, and the present invention is not limited to them, and can be appropriately modified and implemented within a range in which the effects of the present invention are exhibited.

### (Redox Flow Battery)

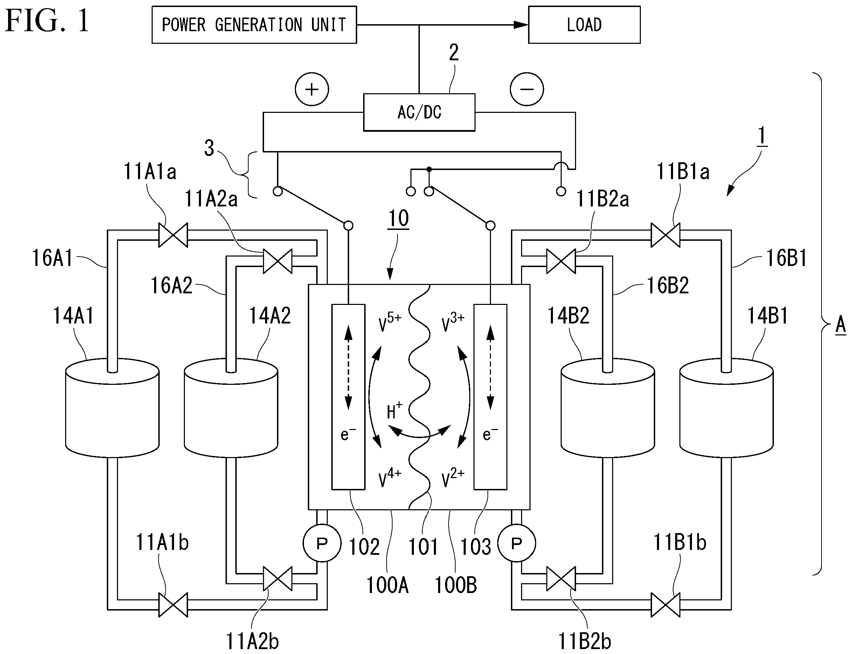

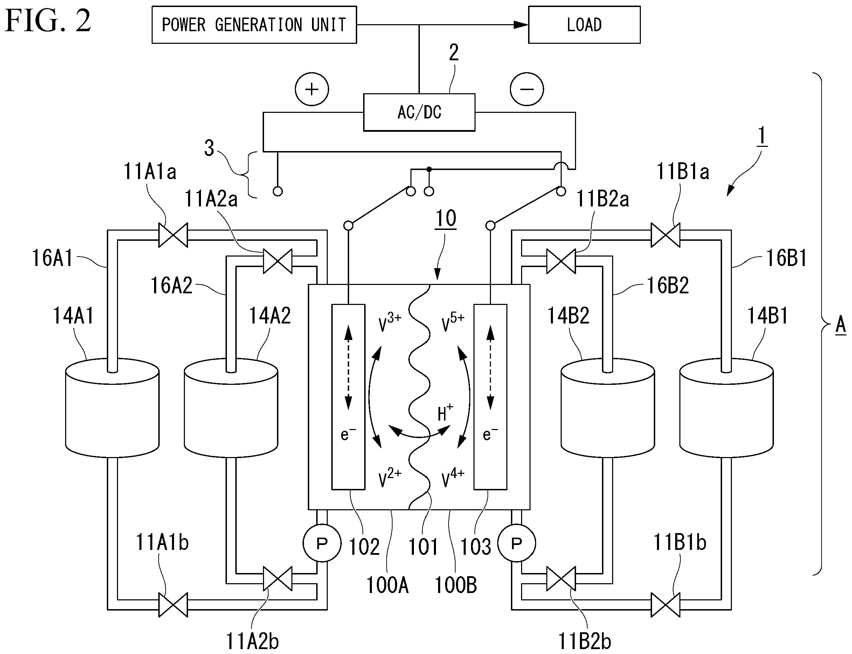

FIG. 1 shows a schematic vertical cross-sectional view of a redox flow battery according to an example of an embodiment of the present invention. The redox flow battery 1 and the AC/DC converter 2 are collectively referred to as a redox flow battery system A (see FIGS. 1 and 2).

The redox flow battery 1 drawn is FIG. 1 includes a battery cell 10 to which a positive-electrode electrolyte and a negative-electrode electrolyte are supplied, two positive-electrode electrolyte tanks 14A1, 14A2 that store the positive-electrode electrolyte, two negative-electrode electrolyte tanks 14B1, 14B2 that store the negative-electrode electrolyte, a positive-electrode electrolyte tank switching device 11A1a, 11A1b, 11A2a, 11A2b that switches a positive-electrode electrolyte tank among two positive-electrode electrolyte tanks 14A1, 14A2; a negative-electrode electrolyte tank switching device llBla, 11B 1b, 11 B2a, 11B2b that switches a negative-electrode electrolyte tank among two negative-electrode electrolyte tanks14B), 14B2; a polarity switching unit 3 that switches the polarity of the electrodes of the battery cells; and a controller (not shown) for controlling switching the polarity of the electrodes, switching of the plurality of positive-electrode electrolyte tanks and switching of the plurality of negative-electrode electrolyte tanks.

Since before and after rebalancing work, the electrolyte in the same tank is switched between the positive and negative electrolytes (for example, during the rebalancing work and after the rebalancing work, the positive-electrode electrolyte tank 14A1 becomes the negative-electrode electrolyte tank 14A1, and the negative-electrode electrolyte tank 14B1 becomes the positive-electrode electrolyte tank 14B1.), the above naming is only for the case of FIG. 1, and the polarity of the cell or the electrode changes depending on the replacement of the electrolyte. The battery cell 10 is not limited to the single cell structure shown in FIGS. 1 and 2, but may be a laminated cell in which a plurality of single cells are electrically connected in series. In this case, reference numerals 102 and 103 represent the positive electrode at the positive electrode side end and the negative electrode at the negative electrode side end of the laminated cell.

The controller controls switching of the polarities of the battery cell 10 and the AC/DC converter 2 by switching the switching unit 3. Further, switching of the plurality of positive-electrode electrolyte tanks is controlled by switching between the positive-electrode electrolyte tank switching means 11Ala and 11Alb and 11A2a and 11A2b. Further, switching of the plurality of negative-electrode electrolyte tanks is controlled by switching between the negative-electrode electrolyte tank switching means 11B1a and 11B1b and 11B2a and 11B2b.

Each positive-electrode electrolyte tank switching means and each negative-electrode electrolyte tank switching means are, for example, electromagnetic valves whose opening and closing operations are controlled by the control means.

Further, in the positive electrode cell 100A is connected to a first positive-electrode electrolyte tank 14A1 for storing a positive electrode electrolyte through a positive-electrode electrolyte circulation pipe 16A1, and is connected to a second positive-electrode electrolyte tank 14A2 for storing a positive electrode electrolyte is circulated in the positive electrode electrolyte through a positive-electrode electrolyte circulation pipe 16A2. The negative electrode cell 100B is connected to a first negative-electrode electrolyte tank 14B1 for storing a negative electrode electrolyte through a negative-electrode electrolyte circulation pipe 16B1, and is connected to a second negative-electrode electrolyte tank 14B2 for storing a negative electrode electrolyte is circulated in the negative electrode electrolyte through a negative-electrode electrolyte circulation pipe 16B2.

A circulation pump P is provided in the positive-electrode electrolyte circulation pipe 16A1 connected to the positive electrode cell 100A. By using the circulation pump P and switching between the positive-electrode electrolyte tank switching device 11A1a and 11A1b and the positive-electrode electrolyte tank switching device 11A2a and 11A2b, the electrolyte in the first positive-electrode electrolyte tank 14A1 is circulated between the first positive-electrode electrolyte tank 14A1 and the positive electrode cell 100A via the positive-electrode electrolyte circulation pipe 16A1, or the electrolyte in the second positive-electrode electrolyte tank 14A2 is circulated between the second positive-electrode electrolyte tank 14A2 and the positive electrode cell 100A via the positive-electrode electrolyte circulation pipe 16A2.

Similarly, a circulation pump P is provided in the negative-electrode electrolyte circulation pipe 16B1 connected to the negative electrode cell 100B. By using the circulation pump P and switching between the negative-electrode electrolyte tank switching device 11B1a and 11B1b and the negative-electrode electrolyte tank switching device 11B2a and 11B2b, the electrolyte in the first negative-electrode electrolyte tank 14B1 is circulated between the first negative-electrode electrolyte tank 14B1 and the negative electrode cell 100B via the negative-electrode electrolyte circulation pipe 16A1, or the electrolyte in the second negative-electrode electrolyte tank 14B2 is circulated between the second negative-electrode electrolyte tank 14B2 and the negative electrode cell 100B via the negative-electrode electrolyte circulation pipe 16B2.

In the redox flow battery 1 shown in FIG. 1, the rebalancing work for compensating the balance of the active material ions is performed by switching the polarity between the battery cell 10 and the AC/DC converter, and by charging with the polarity opposite to that of the battery cell before rebalancing(see FIG. 2).

An example of the rebalancing operation will be described with reference to FIGS. 1 and 2.

For example, a case of rebalancing the pair of the positive-electrode electrolyte tank 14A1 and the negative-electrode electrolyte tank 14B1 in FIG. 1 will be described.

Before rebalancing, 14A1 and 14A2 are positive-electrode electrolyte tanks, 14B1 and 14B2 are negative-electrode electrolyte tanks, 100A is a positive electrode cell, 102 is a positive electrode, 100B is a negative electrode cell, and 103 is a negative electrode. On the other hand, during and after rebalancing, 14B and 14A2 serve as a positive-electrode electrolyte tank, 14A1 and 14B2 serve as a negative-electrode electrolyte tank, 100A serves as a negative electrode cell, 102 serves as a negative electrode, 100B serves as a positive electrode cell, and 103 serves as a positive electrode.

When a pair of 14A1 and 14B1 is used in the discharge after rebalancing, 100A is a negative electrode cell, 102 is a negative electrode, 100B is a positive electrode cell, and 103 is a positive electrode. On the other hand, when the pair of 14A2 and 14B2 is used, 100A is the positive electrode cell, 102 is the positive electrode, 100B is the negative electrode cell, and 103 is the negative electrode.

When the tank is switched from the pair of 14A1 and 14B1 (during rebalancing) to the pair of 14A2 and 14B2 (fully charged), 102 is switched from the negative electrode to the positive electrode and 103 is switched from the positive electrode to the negative electrode. However, the polarity of the electrode of the battery cell 10 can be switched by switching the polarity switching unit 3 so that the +/- connection to the AC/DC converter is not reversed.

In the redox flow battery 1 shown in FIG. 1, the number of positive-electrode electrolyte tanks and the number of negative-electrode electrolyte tanks are two, but the number is not limited to two, and it only needs to be plural.

In a configuration in which the redox flow battery 1 includes a plurality of pairs of positive-electrode electrolyte tanks and negative-electrode electrolyte tanks, by fully charging at least one pair of the positive and negative-electrode electrolyte tanks, it becomes possible to switch to the pair of fully charged tanks for quick discharge even when a request to discharge to the external power system is received during rebalancing work.

Alternatively, in a configuration in which the redox flow battery 1 includes a plurality of pairs of positive-electrode electrolyte tanks and negative-electrode electrolyte tanks, when a request to discharge to the external power system is received during rebalancing work, it becomes possible to perform the discharge by switching to a pair of the plurality of positive-electrode electrolyte tanks and the plurality of negative-electrode electrolyte tanks having the highest charged state of the electrolyte.

On the contrary, in a redox flow battery that has one pair of positive-electrode electrolyte tank and negative-electrode electrolyte tank (hereinafter sometimes referred to as "single tank redox flow battery"), when a request for discharge to an external power system during rebalancing work, it is not possible to start the discharge promptly.

The terminal voltage of the battery cell is determined by the state of charge (SOC) of the electrolyte, the amount of the electrolyte delivered, the current density, and the like. In particular, in relation to the state of charge (SOC) of the electrolyte, in general, it increases monotonically with an increase in the state of charge (SOC) of the electrolyte, and when it reaches full charge, it reaches the preset full charge voltage (hereinafter sometimes referred to as the "rated charging end voltage").

Here, the SOC of the electrolyte is determined by the ratio of V⁻⁵⁺ to V ions (V⁴⁺/N⁵⁺) in the positive electrode electrolyte or the ratio of V²⁺ to V ion (V²⁺ /V³⁺) in the negative electrode electrolyte, as described above, for example, in the case of a vanadium-based redox flow battery. Therefore, when charging is performed with the same charging current, assuming that all the supplied electricity is used for charging, the time required for full charge is determined by the amount of electrolyte.

As described above, in the redox flow battery, it is general to use one positive electrode and one negative electrode as an electrolyte tank.

In such a pair of redox flow batteries as the electrolyte tank, it was not possible to meet a sudden high output demand when the electrolyte was in a low state of charge (SOC).

In the case of a redox flow battery configured to store two positive and negative electrolyte tanks each having the same capacity (hereinafter sometimes referred to as a "multi-tank type redox flow battery"), that is, a redox flow battery in which the amount of electrolyte that can be stored in each tank is 1/2 of the amount of electrolyte in the tank of the single tank redox flow battery, the time required to fully charge **two** tanks with the same amount of electrolyte as that of the single-tank redox flow battery is 1/2 of time required to fully charge the empty tank of the single-tank redox flow battery.

In the multi-tank redox flow battery, by storing the same amount of electrolyte as in the single-tank redox flow battery in a plurality of tanks, it is possible to discharge at a high output by using the electrolyte in a fully charged state, even if it corresponds to a low state of charge (SOC) considering the total amount of electrolyte. A single tank redox flow battery cannot discharge at high output when it is in a low state of charge (SOC), unless it is charged. On the contrary, in the multi-tank redox flow battery, high output discharge becomes possible even when it corresponds to the low state of charge (SOC).

For example, when discharging at 50% state of charge (SOC), even if the terminal voltage is 1.2V for the single tank redox flow battery, a terminal voltage of 1.4 V can be obtained by switching the tank to a tank in which the electrolyte is fully charged for the multi-tank redox flow battery.

As the positive-electrode electrolyte tank switching device and the negative-electrode electrolyte tank switching device, for example, known means such as an electromagnetic valve can be used.

The place where the positive-electrode electrolyte tank switching device and the negative-electrode electrolyte tank switching device are installed is not particularly limited as long as tank switching is possible.

The positive-electrode electrolyte tank switching device and the negative-electrode electrolyte tank switching device may be manually operable.

It is preferable that the controller can further control switching between charging from the external power system and discharging to the external power system.

In this case, when the tank to be used is fully charged, it is possible to immediately switch from charging to discharging and start discharging to the external electric power system.

Furthermore, it is preferable to further include a measuring means for measuring the charge states of the positive electrode electrolyte of the plurality of positive-electrode electrolyte tanks and the negative electrode electrolyte of the negative-electrode electrolyte tanks.

In this case, the tank having the electrolyte of the highest state of charge (SOC) among the tanks can be selected by the positive-electrode electrolyte tank switching device and the negative-electrode electrolyte tank switching device to be fully charged in a shorter time.

### (Method for Operating Redox Flow Battery)

In a method for operating the redox flow battery according to one aspect of the present invention, using the redox flow battery of the present invention, at least one pair of the positive-electrode electrolyte tank and the negative-electrode electrolyte tank among the plurality of positive-electrode electrolyte tanks and the plurality of negative-electrode electrolyte tanks is fully charged, when a request for discharging to the external power system is received during the rebalancing work, the tank to be used is switched to the pair of fully charged tanks, and the pair of tanks is used for discharging.

When there is no request to the external power system for discharging, the pair of fully charged tanks may be switched to perform discharging.

In a method for operating the redox flow battery according to other aspect of the present invention, using the redox flow battery of the present invention, when a request for discharging to the external power system is received during the rebalancing work, the tank to be used is switched to the pair of tanks with the highest state of charge of the electrolyte among the plurality of positive-electrode electrolyte tanks and the plurality of negative-electrode electrolyte tanks, and the pair of tanks is used for discharging.

When there is no request to the external power system for discharging, the tank to be used may be switched to the pair of tanks with the highest state of charge of the electrolyte among the plurality of positive-electrode electrolyte tanks and the plurality of negative-electrode electrolyte tanks, and the pair of tanks is used for discharging.

### REFERENCE SIGNS LIST

1 redox flow battery
3 polarity switching unit
10 battery cell
11A1a, 11A1b, 11A2a, 11A2b positive-electrode electrolyte tank switching device
1B1a, 11B 1b, 11 B2a, 11B2b negative-electrode electrolyte tank switching device
14A1, 14A2 positive-electrode electrolyte tank
14B1, 14B2 negative-electrode electrolyte tank
16A1, 16A2 positive-electrode electrolyte circulation pipe
16B1, 16B2 negative-electrode electrolyte circulation pipe
100 redox flow battery
100A positive electrode cell
100B negative electrode cell
A redox flow battery system

## Claims

1. The redox flow battery, comprising:
a battery cell to which a positive-electrode electrolyte and a negative-electrode electrolyte are supplied;
a plurality of positive-electrode electrolyte tanks that store the positive-electrode electrolyte;
a plurality of negative-electrode electrolyte tanks that store the negative-electrode electrolyte;
a positive-electrode electrolyte tank switching device that switches a positive-electrode electrolyte tank among the plurality of positive electrolyte tanks;
a negative-electrode electrolyte tank switching device that switches a negative-electrode electrolyte tank among the plurality of negative-electrode electrolyte tanks;
a polarity switching unit that switches the polarity of the electrodes of the battery cells; and
a controller for controlling switching the polarity of the electrodes, switching of the plurality of positive-electrode electrolyte tanks and switching of the plurality of negative-electrode electrolyte tanks.

2. A method for operating the redox flow battery according to claim 1,
wherein at least one pair of the positive-electrode electrolyte tank and the negative-electrode electrolyte tank among the plurality of positive-electrode electrolyte tanks and the plurality of negative-electrode electrolyte tanks is fully charged,
when a request for discharging to the external power system is received during the rebalancing work, the tank to be used is switched to the pair of fully charged tanks, and the pair of tanks is used for discharging.

3. A method for operating the redox flow battery according to claim 1,
wherein when a request for discharging to the external power system is received during the rebalancing work, the tank to be used is switched to the pair of tanks with the highest state of charge of the electrolyte among the plurality of positive-electrode electrolyte tanks and the plurality of negative-electrode electrolyte tanks, and the pair of tanks is used for discharging.

4. A method for operating the redox flow battery according to claim 1 or 2,
wherein the rebalancing work is performed by charging with a polarity of the battery cell that is the reverse the polarity of the battery cell before rebalancing.
